# EUROPÄISCHE PATENTSCHRIFT

(11) **EP 2 610 024 B1**
(45) Veröffentlichungstag und Bekanntmachung des Hinweises auf die Patenterteilung: **22.03.2017**
(21) Anmeldenummer: 12198583.2
(22) Anmeldetag: 20.12.2012
(51) Int. Cl.: B23B 31/117, B23Q 11/10

(54) **Aufnahme für ein Fräs- und/oder Bohrwerkzeug.**
Holder for a milling and/or drilling tool.
Logement pour un outil de fraisage et/ou de forage.

(30) Priorität: 27.12.2011 DE 102011057055
(43) Veröffentlichungstag der Anmeldung: 03.07.2013
(73) Patentinhaber: Leicht, Sascha, 89601 Schelklingen-Justingen (DE)
(72) Erfinder: Roth, Georg, verstorben (DE)
(74) Vertreter: Flötotto, Hubert

(56) Entgegenhaltungen:
- EP-A2- 0 092 673
- WO-A1-2010/022875
- DE-A1- 4 322 552
- DE-A1-102010 028 561
- US-A1- 2005 029 423
- US-A1- 2010 270 757

## Beschreibung

### Technisches Umfeld

Die Erfindung betrifft eine Aufnahme für ein Fräs- und/oder Bohrwerkzeug gemäß dem Oberbegriff des unabhängigen Anspruchs 1. Eine Aufnahme mit den Merkmalen des Oberbegriffs des Anspruchs 1 ist aus der US 2010/0270757 A1 bekannt.

### Stand der Technik

Aus der DE 10 2010 028 561 A1 ist es bekannt ein Schrumpffutter mit einer Bedüsungseinrichtung zu versehen, wobei ein Düsenkörper auf das Spannfutter aufgesetzt wird, und durch diesen das Medium bis zum eingesetzten Werkzeug geleitet wird. Dabei wird ein ringförmiger Düsenstrahl an der Stirnseite des Spannfutters erzeugt, der einerseits eine Kühlung bzw. andererseits auch eine Reinigung des Werkzeugs bzw. des Werkstücks bereitstellt. Der starke Düsenstrahl des Medienverteilers sorgt hierbei dagegen für eine vollständige Spanfreiheit sowie für eine gleichmäßige Kühlung von Aufnahme, Fräser und Werkstück. Eine Weiterentwicklung eines derartigen Düsenkörpers bildet die Einbringung von Bohrungen im Mantelbereich der Aufnahme, wobei diese wie Kühlmittelkanäle wirken, die einlassseitig durch Querbohrungen im Spannfutter mit Kühlmittel versorgt werden und wobei die Querbohrungen wiederum mit einer koaxial vorgesehenen Bohrung im Koppelabschnitt in Verbindung stehen, über die das Kühlmedium von einer Pumpvorrichtung eingeleitet wird. Somit wird auch bei dieser Ausführungsform der Düsenstrahl des Kühlmediums bis in die Stirnseite der Aufnahme verbracht, wobei der Düsenstrahl hier unter einem Winkel derart austritt, dass er um das Werkzeug einen Sprühmantel legt, der insbesondere hier die Kühlung und auch die Spanbefreiung vom Werkstück erreichen soll. Bei diesen aus dem Stand der Technik bekannten Lösungen wird es als nachteilig angesehen, dass diese aufwendig bauen, wobei andererseits die Ausrichtung des Düsenstrahls noch verbesserungswürdig ist.

### Aufgabe

Der Erfindung stellt sich somit das Problem eine Aufnahme für ein Fräs- und/oder Bohrwerkzeug derart weiterzubilden, welche hinsichtlich ihrer Bedüsungseinrichtung wesentlich einfacher und effizienter aufbaut, wobei insbesondere der Austrittsstrahl effektiver auf die Bearbeitungsfläche bzw. -bereich gerichtet und gebündelt werden soll.

### Lösung

Erfindungsgemäß wird das Problem mit den Merkmalen des Hauptanspruchs gelöst; vorteilhafte Weiterbildungen der Erfindung ergeben sich aus den Unteransprüchen.

Die mit der Erfindung erreichten Vorteile bestehen darin, dass die Kühlung einen Wasserschirm bereitstellt, der um den Schneidstoff gelegt und gezielt darauf gerichtet ist, wobei mit einer bestimmten Höhe die Kühlung vorteilhaft erreicht wird. Dabei kann das Kühlmedium aus einer Emulsion oder Luft bestehen. Nach der Schrumpfpassung wird der Durchmesser im Tiefsten der Aufnahme größer gedreht, so dass ein Freistich bzw. Hinterschnitt entsteht. In diesem Freistich münden die von der Stirnseite der Aufnahme angesetzten Schrägbohrungen. Somit ist keine Querbohrung mehr notwendig. Die Schräge im Bereich der Kappe ist der Verteilbereich des Kühlmediums, das aus den Schrägbohrungen kommt. Im zylindrischen Teil der Kappe ist ein Feingewinde für die Aufnahme der Streuungskappe vorgesehen. Diese Streuungskappe ermöglicht, durch unterschiedlichen Spalt und unterschiedlicher Schräge, die Streuung des Kühlmediums bzw. des Kühlmittelstrahls entsprechend einzurichten. Hierzu besteht nach der Erfindung die Möglichkeit, dass auf die Einschnürung Kappen mit unterschiedlichen Bedüsungswinkeln aufgeschraubt werden können, so dass für jedes eingesetzte Werkzeug eine angepasste Bedüsungsgeometrie ermöglicht wird. Mit einem Sechskant kann die Kappe auf die Aufnahme geschraubt oder abgeschraubt werden. Die Streuungskappe kann aus hartem und weichem Material bestehen. Auch entsprechende Kunststoffe sind vorgesehen. Diese Version ermöglicht lange, kurze, dünne und dicke Aufnahmen zu fertigen, die mit Hilfe unterschiedlicher Streuungskappen einen Wasserschirm erzeugen, der auf die gewünschte Höhe ringförmig und gleichmäßig auf das Schneidwerkzeug trifft. Somit wird die gezielte Kühlung im Schneidbereich ermöglicht.

Erfindungsgemäß wird hierzu vorgeschlagen, dass im Tiefsten der zentrischen Bohrung ein mit einem größeren Durchmesser versehener Freistich angeordnet ist zur Bildung eines Ringraums um den in der Aufnahmebohrung einsetzten Schaftes, und wobei wenigstens eine Bohrung für die Bedüsung den Ringraum bereichsweise tangential durchdringt zur Bildung einer Einlassöffnung für das Kühlmedium. Aufgrund dieser Ausbildung kann insbesondere der Bohrkanal hier in das konisch ausgebildete Schrumpffutter derart steil gelegt werden, dass die Austritts- oder Auslassöffnung des Bohrkanals bzw. des Kühlmittelkanals möglichst am Kopfbereich des Schrumpffutters zu liegen kommt.

Gemäß der Erfindung weist die Bohrung für die Bedüsung in einer am Kopfbereich der Aufnahme vorgesehenen Einschnürung wenigstens eine Auslassöffnung auf, welche von einer die Einschnürung im Kopfbereich der Aufnahme überdeckenden hülsenartigen Kappe abgedeckt wird. Die Einschnürung ist dabei derart bemessen, dass das Schrumpffutter vom Mantelvolumen her den Bohrkanal für die Bedüsung einfasst. Aufgrund der die Auslassöffnung überdeckenden Kappe wird ein weiterer Ringraum geschaffen, in den das Kühlmedium eindringt und verteilt wird, bevor es stirnseitig aus der Aufnahme heraustritt. Gemäß der Erfindung
bildet die Kappe mit dem Mantel der Einschnürung einen Ringspalt, sowie einen stirnseitigen Öffnungsring an der Aufnahme. Dabei nimmt der Ringspalt zum stirnseitigen Öffnungsring eine sich verjüngende kegelstumpfartige Mantelfläche ein, zur Streuung des Kühlmediums unter einer Schrägen. Es versteht sich nun von selbst, dass, wenn das Kühlmedium austritt, es wie ein Sprühkegel um das Bohr- oder Fräswerkzeug gelegt wird, wobei insbesondere die Kegelspitze hier in dem Bereich der Schneide bzw. des Bohrbereichs gelegt ist, um auf diese Weise eine effektive Kühlung, aber auch eine Spanbeseitigung im Bearbeitungsbereich zu erzielen.

Nach einer besonders vorteilhaften Ausgestaltung der Erfindung ist im unteren Bereich der Einschnürung ein Gewindebereich im Kopfbereich der Aufnahme zum Aufschrauben der Kappe vorgesehen. Die Bohrung für die Bedüsung ist hierbei unter einer leichten Neigung zur Rotationsachse im Mantel der Aufnahme angeordnet. Die Neigung beträgt hierbei vorzugsweise für die Bohrung etwa 2 - 10° zur senkrecht verlaufenden Rotationsachse. Infolge des steilen Neigungswinkels weist die Bohrung für die Bedüsung am oberen Einschnürungsbereich einen elliptischen Öffnungsquerschnitt für die Auslassöffnung auf. Hierbei wird die Auslassöffnung im Einschnürbereich teilweise von dem Innengewindebereich der aufschraubbaren Kappe bzw. von dem kegelstumpfartigen Bereich der Kappe überdeckt. Um die Kappe leicht wechseln zu können bzw. aufzusetzen, weist die aufschraubbare Kappe an ihrem Außenmantel Ansatzflächen für ein Werkzeug auf, so dass ein einfaches Lösen der Kappe ermöglicht wird. Die Kappe als solches kann hierbei aus einem Kunststoff oder aber auch aus Metall gefertigt sein.

### Beschreibung der Zeichnungen

Ein Ausführungsbeispiel der Erfindung ist in den Zeichnungen rein schematisch dargestellt und wird nachfolgend näher beschrieben. Es zeigt:
- Figur 1: eine Seitenansicht einer Aufnahme für ein Fräs- und/oder Bohrwerkzeug in der Perspektive;
- Figur 2: eine geschnittene Ansicht des Spannfutters gemäß der Figur 1 und
- Figur 3: eine Detailansicht des Bereichs des Spannfutters im Kopfbereich, ebenfalls in geschnittener Darstellung.

### Ausführungsbeispiele

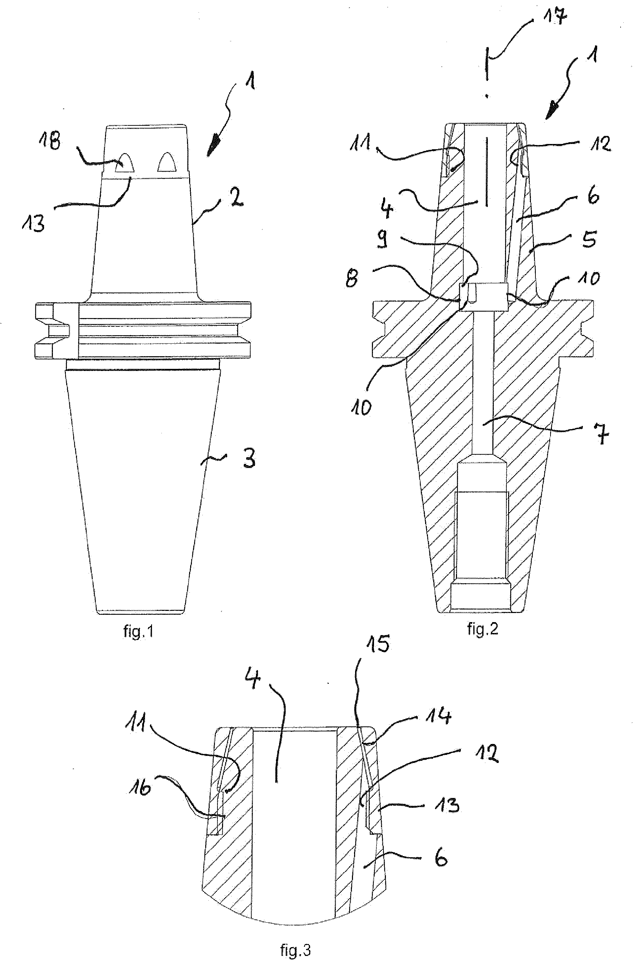

Die Figur 1 zeigt in der perspektivischen Seitenansicht eine Aufnahme 1 für ein nicht näher dargestelltes Fräs- und/oder Bohrwerkzeug, welches ein als Schrumpffutter ausgebildetes Spannfutter 2 umfasst. Die Aufnahme 1 weist hierbei an dem einen Ende einen Koppelabschnitt 3 zur Aufspannung des Spannfutters 2 in eine nicht näher dargestellte Werkzeugmaschine auf. Das andere Ende weist eine zentrische Bohrung 4 auf, die als Aufnahme 1 für den Schaft eines Werkzeugs ausgebildet ist, welches ebenfalls nicht näher dargestellt ist. Dabei ist im Mantelbereich 5 der Aufnahme 1, etwa parallel zur zentrischen Bohrung 4 wenigstens eine Bohrung 6 für eine Bedüsung des Werkzeugs mit einem flüssigem und/oder gasförmigem Medium angeordnet, welche mit einer koaxial vorgesehenen weiteren Bohrung 7 im Koppelabschnitt 3 zur Speisung verbunden ist.

Wie insbesondere aus der Figur 2 in der geschnittenen Darstellung deutlich zu erkennen ist, ist im tiefsten der zentrischen Bohrung 4 ein mit einem größeren Durchmesser versehener Freistich 8 angeordnet, zur Bildung eines Ringraumes 9, der sich um den in der Bohrung 4 eingesetzten Schaft bildet. Dabei durchdringt die Bohrung 6 für die Bedüsung den Ringraum 9 bereichsweise tangential, zur Bildung einer Einlassöffnung 10 für das Kühlmedium. Wie insbesondere aus der Zusammenschau der Figuren 2 und 3 ersichtlich ist, weist die Bohrung 6 für die Bedüsung am Kopfbereich der Aufnahme 1 eine Einschnürung 11 auf, die wenigstens eine Auslassöffnung 12 umfasst. Dabei wird die Einschnürung 11 im Kopfbereich der Aufnahme 1 von einer hülsenartigen Kappe 13 abgedeckt. Hierbei bildet, wie insbesondere in der Figur 3 zu erkennen ist, die Kappe 13 mit dem Mantel der Einschnürung 11 einen Ringspalt 14 sowie einen stirnseitigen Öffnungsring 15 an der Aufnahme 1.

Der Ringspalt 14 nimmt hierbei zum stirnseitigen Öffnungsring 15 einen sich verjüngenden kegelstumpfartigen Mantelraum ein, zur Streuung des Kühlmediums unter einer Schrägen. Es versteht sich nun von selbst, dass, wenn das Kühlmedium austritt, es einen Sprühkegel um das eingesetzte Werkzeug legt.

Zur Festlegung der Kappe 13 befindet sich im unteren Bereich der Einschnürung 11 ein Gewindebereich 16 im Kopfbereich der Aufnahme 1. Nach einer besonders vorteilhaften Weiterbildung der Erfindung ist die Bohrung 6 für die Bedüsung unter einer leichten Neigung zur Rotationsachse 17 im Mantel der Aufnahme 1 angeordnet. Dabei beträgt die Neigung der Bohrung 6 für die Bedüsung vorzugsweise 2 - 10° zur senkrecht verlaufenden Rotationsachse 17. Die Bohrung 6 für die Bedüsung weist hierbei am unteren Einschnürungsbereich einen elliptischen Öffnungsquerschnitt auf, der die Auslassöffnung 12 bildet. Die Auslassöffnung 12 im Einschnürbereich 11 wird hierbei teilweise vom Innengewinde der aufschraubbaren Kappe 13 sowie von dem kegelstumpfartigen Bereich der Kappe 13 überdeckt, wie dies in der Detailansicht der Figur 3 deutlich wird. Die aufschraubbare Kappe 13 weist an ihrem Außenmantel Ansatzflächen 18 für ein nicht näher dargestelltes Werkzeug auf, mit dem die Kappe 13 auf- bzw. abgeschraubt werden kann. Nach einer vorteilhaften Weiterbildung kann die aufschraubbare Kappe 13 hierbei aus einem Kunststoff oder aus Metall gefertigt sein.

### Bezugszeichenliste

- 01: Aufnahme
- 02: Spannfutter
- 03: Koppelabschnitt
- 04: zentrische Bohrung
- 05: Mantelbereich
- 06: Bohrung Bedüsung
- 07: Bohrung Koppelabschnitt
- 08: Freistich
- 09: Ringraum
- 10: Einlassöffnung
- 11: Einschnürung
- 12: Auslassöffnung
- 13: Kappe
- 14: Ringspalt Kegel
- 15: Öffnungsring
- 16: Gewindebereich
- 17: Rotationsachse
- 18: Ansatzflächen

## Patentansprüche

1. Aufnahme (1) für ein Fräs- und/oder Bohrwerkzeug umfassend ein als Schrumpffutter ausgebildetes Spannfutter (2), welches an dem einen Ende einen Koppelabschnitt (3) zur Aufspannung des Spannfutters in eine Werkzeugmaschine aufweist, wobei das andere Ende eine zentrische Bohrung (4) aufweist, die als Aufnahme (1) für den Schaft eines Werkzeugs ausgebildet ist, und wobei im Mantelbereich (5) der Aufnahme (1) etwa parallel zur zentrischen Bohrung (4) wenigstens eine Bohrung (6) für eine Bedüsung des Werkzeugs mit einem flüssigen und/oder gasförmigen Kühlmedium angeordnet ist, welche mit einer koaxial vorgesehenen Bohrung (7) im Koppelabschnitt (3) zur Speisung verbunden ist, und in der zentrischen Bohrung (4) ein mit einem größeren Durchmesser versehener Freistich (8) angeordnet ist, zur Bildung eines Ringraumes (9) um den in der Bohrung (4) eingesetzten Schaft,
**dadurch gekennzeichnet,**
**dass** zur Bildung einer Einlassöffnung (10) für das Kühlmedium die Bohrung (6) für die Bedüsung am unteren Ende den Ringraum (9) bereichsweise tangential durchdringt wobei das obere Ende der Bohrung (6) für die Bedüsung in eine am Kopfbereich der Aufnahme (1) Einschnürung (11) mündet, welche von einer die Einschnürung (11) im Kopfbereich der Aufnahme (1) überdeckenden hülsenartigen Kappe (13) abgedeckt ist, und die mit dem Mantel der Einschnürung (11) einen Ringspalt (14) sowie einen stirnseitigen Öffnungsring (15) an der Aufnahme (1) bildet.

2. Aufnahme nach Anspruch 1,
**dadurch gekennzeichnet,**
**dass** auf die Einschnürung (11) Kappen (13) mit unterschiedlichen Bedüsungswinkeln aufschraubbar sind.

3. Aufnahme nach Anspruch 2,
**dadurch gekennzeichnet,**
**dass** der Ringspalt (14) zum stirnseitigen Öffnungsring (15) einen sich verjüngenden kegelstumpfartigen Mantelraum einnimmt, zur Streuung des Kühlmediums unter einer Schrägen.

4. Aufnahme nach Anspruch 1 und 2,
**dadurch gekennzeichnet,**
**dass** im unteren Bereich der Einschnürung (11) ein Gewindebereich (16) im Kopfbereich der Aufnahme (1) zum Aufschrauben der Kappe (13) vorgesehen ist.

5. Aufnahme nach Anspruch 1,
**dadurch gekennzeichnet,**
**dass** die Bohrung (6) für die Bedüsung unter einer leichten Neigung zur Rotationsachse (17) im Mantel der Aufnahme (1) angeordnet ist.

6. Aufnahme nach Anspruch 5,
**dadurch gekennzeichnet,**
**dass** die Neigung der Bohrung (6) für die Bedüsung etwa 2° bis 10° zur senkrecht verlaufenden Rotationsachse (17) beträgt.

7. Aufnahme nach Anspruch 5 und 6,
**dadurch gekennzeichnet,**
**dass** die Bohrung (6) für die Bedüsung am oberen Einschnürungsbereich eine einen elliptischen Öffnungsquerschnitt einnehmende Auslassöffnung (12) aufweist.

8. Aufnahme nach Anspruch 7,
**dadurch gekennzeichnet,**
**dass** die Auslassöffnung (12) im Einschnürbereich teilweise von dem Innengewindebereich der aufschraubbaren Kappe (13) sowie von dem kegelstumpfartigen Bereich der Kappe (13) überdeckt ist.

9. Aufnahme nach Anspruch 8,
**dadurch gekennzeichnet,**
**dass** die aufechraubbare Kappe (13) an ihrem Außenmantel Ansatzflächen (18) für ein Werkzeug aufweist.

10. Aufnahme nach Anspruch 9,
**dadurch gekennzeichnet,**
**dass** die aufschraubbare Kappe (13) aus Kunststoff oder Metall gefertigt ist.

## Claims

1. Holder (1) for a milling and/or drilling tool comprising a chuck (2) configured as a contraction chuck which has a coupling section (3) for clamping the chuck into a machine tool at one end, wherein the other end has a central bore (4) which is configured as a holder (1) for the shaft of a tool, and wherein in the jacket region (5) of the holder (1) approximately parallel to the central bore (4), at least one bore (6) is provided for spraying the tool with a liquid and/or gaseous cooling medium, which is connected to a coaxially provided bore (7) in the coupling section (3) for feeding, and an undercut (8) provided with a larger diameter is arranged in the central bore (4) to form an annular space (9) around the shaft inserted in the bore (4), **characterized in that** in order to form an inlet opening (10) for the cooling medium, the bore (6) for spraying penetrates the annular space (9) at the lower end tangentially in some regions, wherein the upper end of the bore (6) for spraying opens into a constriction (11) at the head region of the holder (1), which is covered by a sleeve-like cap (13) covering the constriction (11) in the head region of the holder (1) and which forms an annular gap (14) with the jacket of the constriction (11) and a front-end opening ring (15) on the receptacle (1).

2. The holder according to claim 1, **characterized in that** caps (13) with different spray angles can be screwed onto the constriction (11).

3. The holder according to claim 2, **characterized in that** the annular gap (14) towards the front-end opening ring (15) occupies a tapering frustro-conical jacket space for spraying the cooling medium at an inclination.

4. The holder according to claim 1 or 2, **characterized in that** in the lower region of the constriction (11) a threaded region (16) is provided in the head region of the receptacle (1) for screwing on the cap (13).

5. The holder according to claim 1, **characterized in that** the bore (6) for the spraying is arranged at a slight inclination to the axis of rotation (17) in the jacket of the holder (1).

6. The holder according to claim 5, **characterized in that** the inclination of the bore (6) for the spraying is about 2° to 10° to the perpendicularly running axis of rotation (17).

7. The holder according to claim 5 or 6, **characterized in that** the bore (6) for the spraying has an outlet opening (12) having an elliptical opening cross-section at the upper constriction region.

8. The holder according to claim 7, **characterized in that** the outlet opening (12) in the constriction region is partially covered by the inner thread region of the screw-on cap (13) and by the frustro-conical region of the cap (13).

9. The holder according to claim 8, **characterized in that** the screw-on cap (13) has shoulder surfaces (18) for a tool on its outer jacket.

10. The holder according to claim 9, **characterized in that** the screw-on cap (13) is made of plastic or metal.

## Revendications

1. Logement (1) pour un outil de fraisage et/ou de perçage, comprenant un mandrin (2) conçu en tant que mandrin rétractable, qui sur l'une des extrémités comporte un segment de couplage (3) pour fixer le mandrin dans une machine-outil, l'autre extrémité comportant un perçage (4) central qui est conçu en tant que logement (1) pour la tige d'un outil et dans la zone d'enveloppe (5) du logement (1), approximativement à la parallèle du perçage (4) central étant placé au moins un perçage (6) pour un arrosage de l'outil avec un liquide de coupe liquide et/ou gazeux, lequel est relié avec un perçage (7) prévu de manière coaxiale dans le segment de couplage (3) pour l'alimentation et dans le perçage (4) central étant placée une rainure de dégagement (8) dotée d'un plus grand diamètre, pour former un espace annulaire (9) autour de la tige insérée dans le perçage (4),
**caractérisé en ce que**
pour créer un orifice d'entrée (10) pour le liquide de coupe, sur l'extrémité inférieure, le perçage (6) pour l'arrosage traverse par endroits, de manière tangentielle l'espace annulaire (9), pour l'arrosage, l'extrémité supérieure du perçage (6) débouchant dans un étranglement (11) dans la zone de tête du logement (1), lequel est couvert par une calotte (13) de type fourreau recouvrant l'étranglement (11) dans la zone de tête du logement (1) et forme avec l'enveloppe de l'étranglement (11) une fente annulaire (14), ainsi qu'une bague d'orifice (15) frontale sur le logement (1).

2. Logement selon la revendication 1,
**caractérisé en ce que**
des calottes (13) avec différents angles d'arrosage peuvent se visser sur l'étranglement (11).

3. Logement selon la revendication 2,
**caractérisé en ce que**
la fente annulaire (14) vers la bague d'orifice (15) frontale adopte un espace d'enveloppe se rétrécissant de manière tronconique, pour diffuser le liquide de coupe sous une inclinaison.

4. Logement selon la revendication 1 et la revendication 2,
**caractérisé en ce que**
dans la zone inférieure de l'étranglement (11), une zone filetée (16) est prévue dans la zone de tête du logement (1) pour visser la calotte (13).

5. Logement selon la revendication 1,
**caractérisé en ce que** le perçage (6) pour l'arrosage est placé sous une légère inclinaison par rapport à l'axe de rotation (17) dans l'enveloppe du logement (1).

6. Logement selon la revendication 5,
**caractérisé en ce que** l'inclinaison du perçage (6) pour l'arrosage est d'environ de 2° à 10° par rapport à l'axe de rotation (17) s'écoulant à la verticale.

7. Logement selon la revendication 5 et la revendication 6,
**caractérisé en ce que** sur l'extrémité supérieure de l'étranglement, le perçage (6) pour l'arrosage comporte un orifice de sortie 12) adoptant une section transversale d'ouverture elliptique.

8. Logement selon la revendication 7,
**caractérisé en ce que**
dans la zone d'étranglement, l'orifice de sortie (12) est recouvert en partie par la zone de taraudage de la calotte (13) à visser, ainsi que par la zone de forme tronconique de la calotte (13).

9. Logement selon la revendication 8,
**caractérisé en ce que** sur son enveloppe extérieure, la calotte (13) à visser comporte des surfaces de montage (18) pour un outil.

10. Logement selon la revendication 9,
**caractérisé en ce que**
la calotte à visser (13) est fabriquée en matière plastique ou en métal.
